(19) Europäisches Patentamt

European Patent Office

Office européen des brevets

(11) **EP 1 321 655 A1**

(12) **EUROPÄISCHE PATENTANMELDUNG**

(43) Veröffentlichungstag:
**25.06.2003 Patentblatt 2003/26**

(51) Int Cl.7: **F02D 41/40**, F02D 45/00,
F02D 35/02

(21) Anmeldenummer: **01130557.0**

(22) Anmeldetag: **21.12.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(71) Anmelder: **Ford Global Technologies, Inc.,
A subsidiary of Ford Motor Company**
**Dearborn, Michigan 48126 (US)**

(72) Erfinder:
• **Christen, Urs
52072 Aachen (DE)**
• **Scholl, David James
Huntington Woods, MI 48070 (US)**

(74) Vertreter: **Drömer, Hans-Carsten, Dipl.-Ing.
Ford-Werke Aktiengesellschaft,
Patentabteilung NH/DRP
50725 Köln (DE)**

(54) **Verfahren zur Detektion und Regelung des Verbrennungsbeginns in einer Brennfraftmaschine**

(57)     Die Erfindung betrifft ein Verfahren zur Detektion des Verbrennungsbeginns in der Brennkammer eines Motors mit Selbstzündung. Bei dem Verfahren wird der Verlauf des Zylinderdruckes gemessen, und das so erhaltene Signal wird mit Hilfe von Wavelet-Funktionen transformiert. Ein plötzlicher Anstieg im Absolutwert der erhaltenen Wavelet-Koeffizienten zeigt den Beginn der Verbrennung an. Die hierdurch mögliche einfache und zugleich genaue Detektion des Verbrennungsbeginns kann im Rahmen einer Rückkopplungsregelung dazu verwendet werden, durch Veränderung von Motorbetriebsparametern - wie etwa den Injektionsbeginn des Kraftstoffes - den Verbrennungsbeginn in gewünschter Weise zu regeln.

Fig. 4

EP 1 321 655 A1

**Beschreibung**

Die Erfindung betrifft ein Verfahren zur Detektion des Verbrennungsbeginns in der Brennkammer einer Brennkraftmaschine, wobei der zeitliche Verlauf des Zylinderdrucks gemessen wird. Ferner betrifft die Erfindung ein Verfahren zur Regelung des Verbrennungsbeginns in der Brennkammer einer Brennkraftmaschine mit Selbstzündung durch Veränderung von Motorbetriebsparametern. Weiterhin betrifft die Erfindung eine Motorsteuerung für eine Brennkraftmaschine mit Selbstzündung mit einem Eingang für ein Zylinderdruck-Signal.

In Brennkraftmaschinen mit Selbstzündung beziehungsweise kompressionsabhängiger Zündung hängt der Beginn der Verbrennung von verschiedenen Betriebsparametern ab, wie zum Beispiel dem Zylinderdruck, der Temperatur, der Sauerstoffkonzentration und - bei Motoren mit Direktinjektion - dem Zeitpunkt der Kraftstoffinjektion. Von dem Verbrennungsbeginn hängen andererseits viele Auswirkungen des Verbrennungsvorganges wie etwa das Drehmoment, die Emissionen oder die Verbrennungsgeräusche ab. Aus diesem Grund ist eine Detektion und Regelung des Verbrennungsbeginns wichtig.

Bei den derzeit auf dem Markt befindlichen Kraftfahrzeugmotoren wird der Verbrennungsbeginn nicht gemessen und nur indirekt kontrolliert, indem basierend auf der Motordrehzahl und -last die gewünschte Zeitsteuerung der Kraftstoffinjektion angepaßt wird. Eine derartige nicht rückgekoppelte Steuerung ist jedoch nicht hinreichend robust, da z. B. Veränderungen der Kraftstoffqualität oder Ungenauigkeiten in den Kraftstoffinjektionseinrichtungen, die zu Abweichungen zwischen dem gewünschten und dem tatsächlichen Beginn der Injektion führen, nicht kompensiert werden können.

Bekannte Laborverfahren zur Bestimmung des Verbrennungsbeginns beruhen in der Regel auf Berechnungen der Wärmeabgabe basierend auf Zylinderdruck-Signalen, wobei der Verbrennungsbeginn als derjenige Punkt definiert wird, bei dem die Wärmefreisetzungsrate von negativ nach positiv wechselt. Alternativ kann der Gradient der Wärmeabgaberate in Richtung zurückliegender Zeitpunkte extrapoliert werden, wobei dann der Schnittpunkt dieses verlängerten Gradienten mit der Nullinie den Verbrennungsbeginn definiert. Des Weiteren kann der Verbrennungsbeginn durch Differentiation des Zylinderdruck-Verlaufes oder einfach durch eine visuelle Auswertung dieses Verlaufes bestimmt werden. Dabei wird die Erkennung erleichtert bzw. präziser, wenn das Differenzsignal zwischen dem Zylinderdruck und einer isentropen Kompression (ohne Verbrennung) verwendet wird.
Ferner ist aus der EP 1 132 605 A2 ein Verfahren zur Bestimmung des Verbrennungsbeginns bekannt, bei dem ein ständiger Vergleich eines aktuellen Meßwertes mit einem laufenden Mittelwert der zurückliegenden Meßwerte stattfindet. Falls sich hierbei eine Differenz oberhalb eines vorgegebenen Schwellwertes ergibt, wird unter den zurückliegenden Meßpunkten derjenige gesucht, der zum erstenmal oberhalb des Mittelwertes liegt, und es wird angenommen, daß zum entsprechenden Zeitpunkt die Verbrennung begonnen hat. Nachteilig hieran ist jedoch, daß dieses Verfahren störanfällig gegenüber einer zufälligen Schwankung des Zylinderdruck-Signals ist.

Vor diesem Hintergrund war es Aufgabe der vorliegenden Erfindung, ein verbessertes Verfahren zur Detektion und Regelung des Verbrennungsbeginns sowie eine entsprechende Motorsteuerung bereitzustellen, welches bzw. welche eine große Störsicherheit aufweisen.

Diese Aufgabe wird durch ein Verfahren mit den Merkmalen des Anspruchs 1 beziehungsweise 8 sowie durch eine Motorsteuerung mit den Merkmalen des Anspruchs 9 gelöst.

Vorteilhafte Ausgestaltungen sind in den Unteransprüchen enthalten.

Bei dem Verfahren zur Detektion des Verbrennungsbeginns in der Brennkammer einer Brennkraftmaschine wird zunächst der zeitliche Verlauf des Zylinderdruckes gemessen. Vorzugsweise wird das Zylinderdruck-Signal dabei in Abhängigkeit vom Kurbelwellenwinkel dargestellt, so daß es in unmittelbarem Bezug zum Motortakt vorliegt. Die Messung kann sowohl direkt als auch indirekt erfolgen, wobei bei der indirekten Messung mindestens eine Größe beobachtet wird, aus welcher sich der Zylinderdruck berechnen läßt. Das Verfahren ist dadurch gekennzeichnet, daß das gewonnene Zylinderdruck-Signal einer Wavelet-Transformation unterworfen wird, und daß auf die daraus resultierenden Wavelet-Koeffizienten ein Auswahlkriterium angewendet wird, dessen Erfüllung die zum Verbrennungsbeginn gehörigen Koeffizienten anzeigt.

Bei einer Wavelet-Transformation handelt es sich um eine der Fourier-Transformation ähnliche mathematische Operation zur Analyse beziehungsweise Komponentenzerlegung eines Signals. Anders als bei der Fourier-Transformation wird jedoch nicht nur der Frequenzgehalt des Signals offenbart, sondern auch eine lokale Analyse (bezüglich der unabhängigen Variablen des Signals, also in der Regel des Ortes oder der Zeit) vorgenommen. Diese Eigenschaften der Wavelet-Transformation werden bei dem vorgeschlagenen Verfahren ausgenutzt, um Diskontinuitäten in dem Signal oder in seinen Ableitungen zu detektieren. Dabei wird eine signifikante Änderung der Steigung des Zylinderdruck-Signals, die durch den Beginn der Verbrennung verursacht wird, detektiert und lokalisiert. Da die Koeffizienten der Wavelet-Transformation dem Signalverlauf lokal zuzuordnen sind, ist mit der Ermittlung der den Verbrennungsbeginn anzeigenden Koeffizienten gleichzeitig der Zeitpunkt des Verbrennungsbeginns bekannt. Das erfindungsgemäße Verfahren hat dabei den Vorteil, daß es unmittelbar mit dem Zylinderdruck-Signal arbeitet und nicht hieraus abgeleitete Größen wie etwa die Wärmeabgaberate bestimmen muß, was stets mit zusätzlichen Fehlern verbunden ist. Darüber hinaus basiert das Verfahren auf einer Analyse des kompletten Verlaufs des Zylinderdruck-Signals über mindestens einen Motorzyklus und ist daher gegenüber punktuellen Störungen robust. Ferner können weitere Anwendungen der Wavelet-Transformation wie etwa die Definition eines Geräuschindexes vorgenommen werden, so daß der erforderliche Rechenaufwand verschiedenen Anwendungen zugute kommt (vgl. Europäische Patentanmeldung Nr. 00710035.7).

Das vorstehend genannte Auswahlkriterium kann insbesondere durch den Beginn des Überschreitens eines vorgegebenen Schwellwertes durch den Absolutwert der Wavelet-Koeffizienten definiert sein. D.h., daß gemäß dem Kriterium unter den berechneten Wavelet-Koeffizienten derjenige ausgewählt wird, dessen Absolutwert im Verlauf des Signals gesehen zum ersten Mal den vorgegebenen Schwellwert überschreitet. Dieser verhältnismäßig große Koeffizient deutet darauf hin, daß an der zugehörigen Stelle eine scharfe Änderung im Verlauf des Zylinderdruck-Signals vorliegt, welche wiederum auf den zu detektierenden Verbrennungsbeginn hinweist.

Der bei dem genannten Auswahlkriterium zugrundeliegende vorgegebene Schwellwert kann vorzugsweise von Motorbetriebsparametern abhängen, so daß dieser dem jeweiligen Betriebszustand der Brennkraftmaschine optimal angepaßt ist. Insbesondere kann der Schwellwert gemäß empirischen oder theoretischen Zusammenhängen von der Drehzahl und/oder dem Drehmoment der Brennkraftmaschine abhängen.

Als Wavelet-Transformation wird insbesondere eine diskrete Wavelet-Transformation verwendet. Als Wavelet-Funktionen und Skalierungsfunktionen werden vorzugsweise solche Funktionen verwendet, welche die Multiresolutionsbedingungen erfüllen (vgl. Erläuterungen unten). Bei derartigen Funktionen ist es möglich, daß die Berechnung der Wavelet-Koeffizienten durch eine sequentielle beziehungsweise kaskadenförmige Hochpaßfilterung und Tiefpaßfilterung des Zylinderdruck-Signals gewonnen werden. Dies bedeutet eine erhebliche Vereinfachung des Rechenaufwandes.

Gemäß einer Weiterbildung des vorstehend genannten Vorgehens werden die zwischen den Hochpaßfilterungen und Tiefpaßfilterungen üblicherweise stattfindenden Auflösungsreduktionen unterlassen, wodurch alle mit der Wavelet-Transformation berechneten Detailfunktionen die gleiche hohe Auflösung erhalten.

Hierdurch wird eine präzisere Festlegung des Zeitpunktes des Verbrennungsbeginns möglich.

Gemäß einer anderen Weiterbildung des Verfahrens werden für die Wavelet-Funktionen und Skalierungsfunktionen Näherungen verwendet. Die Näherungsfunktionen können so gewählt werden, daß diese eine einfachere und gleichwohl ausreichend präzise Berechnung der Wavelet-Transformation erlauben.

Die Erfindung betrifft ferner ein Verfahren zur Regelung des Verbrennungsbeginns in der Brennkammer einer Brennkraftmaschine mit Selbstzündung, wobei das Verfahren durch Veränderung von Motorbetriebsparametern, insbesondere vom Injektionszeitpunkt des Kraftstoffes, auf den Zeitpunkt des Verbrennungsbeginns Einfluß nimmt. Das Verfahren ist dadurch gekennzeichnet, daß der Verbrennungsbeginn mit einem Verfahren der vorstehend erläuterten Art detektiert wird, und daß dieser Zeitpunkt als Regelgröße in einem rückgekoppelten Regelungsprozeß verwendet wird. Der Verbrennungsbeginn wird demnach mit Hilfe einer Wavelet-Transformation des Zylinderdruck-Signals ermittelt. Durch die rückgekoppelte Regelung des Beginns der Verbrennung wird ein stabilerer und besserer Motorbetrieb ermöglicht. Dieses Ziel wird bei dem vorgeschlagenen Verfahren dadurch unterstützt, daß der Beginn des Verbrennungszeitpunktes in einfacher Weise und mit großer Genauigkeit bestimmt werden kann. Für die Art und Weise, wie auf die Lage des Verbrennungszeitpunktes Einfluß genommen wird, bestehen verschiedene Möglichkeiten. Beispiele hierfür sind in der US 4 463 729, US 4 760 830, EP 0 071 557 sowie der WO 99/42718 offenbart.

Die Erfindung betrifft weiterhin eine Motorsteuerung für eine Brennkraftmaschine mit Selbstzündung, wobei die Motorsteuerung einen Eingang für die Zuführung eines Zylinderdruck-Signals aufweist. Die Motorsteuerung ist dadurch gekennzeichnet, daß diese derart ausgebildet ist, daß diese nach einem Verfahren der oben erläuterten Art aus dem zugeführten Zylinderdruck-Signal den Verbrennungsbeginn bestimmen kann. D.h., daß die Motorsteuerung eine Wavelet-Transformation des zugeführten Zylinderdruck-Signals vornehmen und die daraus resultierenden Wavelet-Koeffizienten einem Auswahlkriterium unterwerfen kann, dessen Erfüllung die zum Verbrennungsbeginn gehörenden Koeffizienten anzeigt.

Gemäß einer Weiterbildung der Motorsteuerung weist diese Ausgänge auf, über welche die Steuerung von Motorbetriebsparametern - wie insbesondere dem Zeitpunkt der Kraftstoffinjektion - vorgenommen werden kann, wobei die Motorsteuerung ferner derart ausgebildet ist, daß diese über die Ausgänge eine Rückkopplungsregelung des Verbrennungsbeginns ermöglicht. Die genannte Motorsteuerung kann dabei insbesondere als elektronische Datenverarbeitungseinheit beziehungsweise als Mikrocomputer ausgebildet sein. Die Motorsteuerung ermöglicht mit verhältnismäßig einfachen Mitteln eine präzise Bestimmung und Einhaltung eines gewünschten Verbrennungsbeginns.

Die Erfindung wird nachfolgend anhand der Figuren beispielhaft näher erläutert. Es zeigen:

Fig. 1    ein Beispiel für ein gemessenes Zylinderdruck-Signal im Vergleich zu einem Referenzsignal sowie in einem vergrößerten Maßstab das hieraus gebildete Differenzsignal;

Fig. 2    ein Beispiel für die Bestimmung des Verbrennungsbeginns aus der Wärmefreisetzungsrate;

Fig. 3    den Verlauf des Zylinderdruck-Signals über eine Motorumdrehung und die hieraus gewonnenen Wavelet-Koeffizienten bei grober Auflösung;

Fig. 4    den Verlauf des Zylinderdruck-Signals über eine Motorumdrehung und die hieraus gewonnenen Wavelet-Koeffizienten bei feinerer Auflösung;

Fig. 5    eine Daubéchies Wavelet-Funktion 5. Ordnung;

Fig. 6    eine biorthogonale Wavelet-Funktion 5. Ordnung;

Fig. 7    eine für das erfindungsgemäße Verfahren optimierte Pseudo-Wavelet-Funktion;

Fig. 8a    ein weiteres Beispiel für gemessene Zylinderdruck-Signale;

Fig. 8b    festgestellte Zeitpunkte des Verbrennungsbeginns aus den Signalen von Figur 8a bei Verwendung von Coiflet-2 Wavelet-Funktionen;

Fig. 8c    festgestellte Zeitpunkte des Verbrennungsbeginns aus den Signalen von Figur 8a bei Verwendung von Pseudo-Wavelets;

Fig. 8d    festgestellte Zeitpunkte des Verbrennungsbeginns aus den Signalen von Figur 8a bei Durchführung einer Faltung anstelle einer Filterung unter Auflösungsreduktion;

Fig. 9    die bei einer Fourier-Transformation und bei einer Wavelet-Transformation verwendeten Basisfunktionen;

Fig. 10    eine diskrete Wavelet-Transformation am Beispiel eines Rechteck-impulses;

Fig. 11    die baumartige Struktur der Filter für die Wavelet-Transformation; und

Fig. 12    eine schematische Darstellung einer Wavelet-Transformation eines Zylinderdruck-Signals.

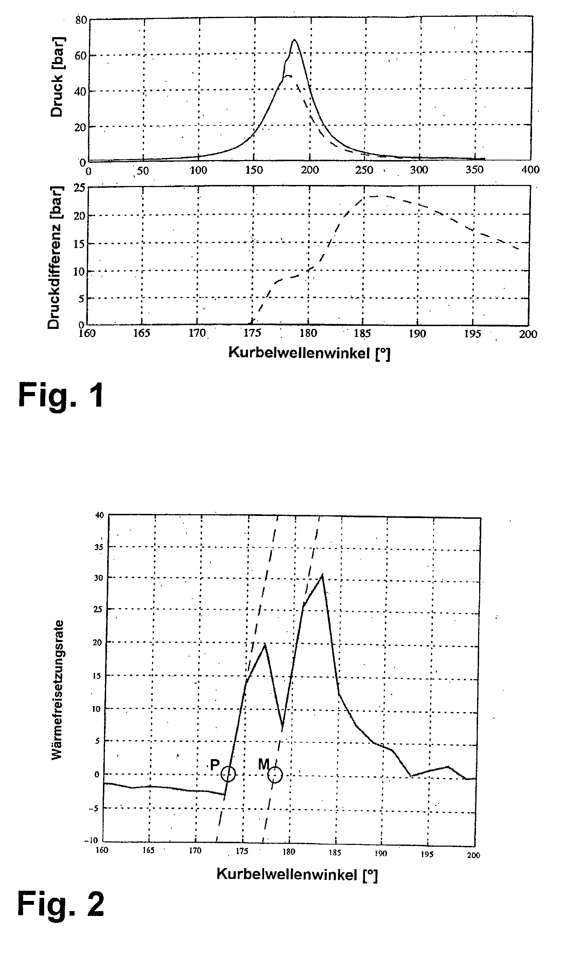

In Figur 1 ist der Verlauf des Zylinderdrucks (durchgezogene Linie) eines 2.0 l Common Rail Motors bei einer Drehzahl von 800 U/min und einer Last von 36 Nm dargestellt, wobei auf der vertikalen Achse der Druck in der Einheit bar und auf der horizontalen Achse der jeweilige Kurbelwellenwinkel aufgetragen ist. Ferner ist im oberen Diagramm zu Vergleichszwecken als gestrichelte Linie ein berechneter Verlauf für eine isentropische Kompression (ohne Verbrennung) dargestellt. Während der Aufnahme des realen Zylinderdruck-Signals wurde eine Voreinspritzung von 1 mg/Takt bei 7,6° vor dem oberen Totpunkt (welcher 180° auf der horizontalen Achse entspricht) vorgenommen. In dem unteren Diagramm von Figur 1 ist die Differenz zwischen dem tatsächlichen Zylinderdruck und der berechneten Kurve für isentrope Kompression vergrößert dargestellt. Eine von Null verschiedene Differenz zwischen den beiden Signalen tritt etwa 5° vor dem oberen Totpunkt auf, was als Beginn der Verbrennung interpretiert werden kann.

Aus den resultierenden Kurven kann der Unterschied zwischen der Vorverbrennung und der Hauptverbrennung nicht festgestellt werden. Außerdem kann der Zeitpunkt des Verbrennungsbeginns nicht präziser bestimmt werden, als es durch die Abtastrate des Druckverlaufes (im Beispiel: 2° Kurbelwellenwinkel) vorgegeben ist.

Zu Referenzzwecken ist in Figur 2 die Berechnung des Verbrennungsbeginns basierend auf der Wärmefreisetzungsrate dargestellt. Die auf der vertikalen Achse aufgetragene, aus dem Zylinderdruck gemäß Figur 1 berechnete Wärmefreisetzungsrate ist in dem Diagramm von Figur 2 über dem Kurbelwellenwinkel aufgetragen. Der Beginn der Verbrennung wird dabei durch den Schnittpunkt des Gradienten der Wärmefreisetzungsrate mit der Null-Linie definiert. Gemäß diesem Verfahren wird bei der dargestellten Situation der Beginn der Vorverbrennung bei 6,7° und der Beginn der Hauptverbrennung bei 1,8° vor dem oberen Totpunkt (180°) festgestellt. Das zugrundeliegende Verfahren ist jedoch aufgrund der notwendigen Bestimmung der Wärmefreisetzungsrate verhältnismäßig umständlich und mit Fehlerquellen belastet.

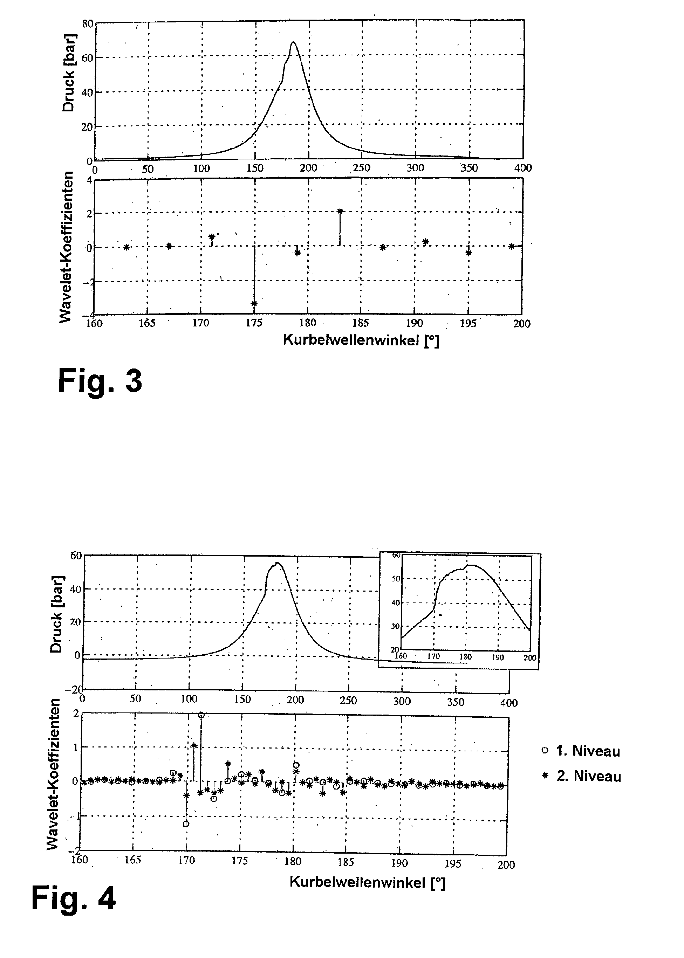

In Figur 3 ist im oberen Diagramm wiederum der gemessene Verlauf des Zylinderdrucks entsprechend Figur 1 dargestellt, während das untere Diagramm in einer Ausschnittsvergrößerung die aus diesem Zylinderdruck-Signal berechneten Wavelet-Koeffizienten darstellt. Der erste betragsmäßig auffallend große Wavelet-Koeffizient liegt bei 175° (5° vor dem oberen Totpunkt), was dem Ergebnis aus Figur 1 entspricht. Mit der zugrundeliegenden Auflösung der Wavelets beziehungsweise des Zylinderdruck-Signals von 2° Kurbelwellenwinkel können jedoch die Anfänge der Vorverbrennung und der Hauptverbrennung nicht differenziert werden.

Figur 4 zeigt, daß dies bei Verwendung einer höheren Auflösung möglich ist. Im oberen Teil von Figur 4 ist der gemessene Zylinderdruck-Verlauf eines Motors bei 800 U/min dargestellt, welcher mit einer Abtastrate von 15 kHz abgetastet wurde. Die im unteren Diagramm von Figur 4 aufgetragenen Wavelet-Koeffizienten lassen erkennen, daß der Beginn der Vorverbrennung bei etwa 10° vor dem oberen Totpunkt und der Beginn der Hauptverbrennung etwa am oberen Totpunkt liegen. Zwischen den beiden Verbrennungsanfängen besteht eine Winkeldifferenz von ca. 11,6°.

Wie nachfolgend im Rahmen der allgemeinen Beschreibung von Wavelet-Transformationen näher erläutert wird, zerlegt eine Wavelet-Transformation ein Signal in ein Approximationssignal $\lambda_0(k)$ und mehrere Detailsignale $\gamma_j(k)$. Die Transformation erfolgt bei Wavelet-Funktionen, welche die Multiresolutionsbedingung erfüllen, durch wiederholte Filterung des ursprünglichen Signals, was zu Detailsignalen mit hochfrequentem Inhalt führt:

$$\gamma_j(k) = \sum_n \widetilde{g}(-n) \cdot \lambda_{j+1}(2k - n) \qquad (1)$$

wobei $\widetilde{g}$ der auf die Approximationskoeffizienten $\lambda_{j+1}$ des vorhergehenden Niveaus der Wavelet-Transformation angewendete Filter ist.

Für die Detektion des Verbrennungsbeginns in der Brennkammer einer Brennkraftmaschine werden die Detailsignale des höchsten Niveaus $j$, welche die höchsten Frequenzinformationen enthalten, verwendet, da diese die beste Auflösung zur Lokalisierung des gesuchten Zeitpunktes bieten. Auf niedrigeren Niveaus ist die Anzahl der Punkte aufgrund der Auflösungsreduktion geringer, die bei jedem Schritt der Wavelet-Transformation stattfindet. Der Absolutwert der Detailkoeffizienten auf dem höchsten beziehungsweise auf einigen der höchsten Transformationsniveaus wird dann mit einem Schwellwert $\gamma_{thresh}$ verglichen, welcher vorzugsweise noch von Motorbetriebsbedingungen wie der Motordrehzahl $N$ und dem Motordrehmoment $T_b$ sowie dem Transformationsniveau j abhängt:

$$|\gamma_j(k)| > \gamma_{thres,j}(N, T_b) \qquad (2)$$

Der Index $k$, bei welchem der Schwellwert zum ersten Mal überschritten wird, wird dann zur Lokalisierung des Verbrennungsbeginns in Bezug auf den Kurbelwellenwinkel verwendet. Falls das Zylinderdruck-Signal in Abhängigkeit vom Kurbelwellenwinkel aufgezeichnet wird, ist diese Lokalisierung unmittelbar möglich. Falls dieses basierend auf der Zeit aufgezeichnet wird, kann die Position (Kurbelwellenwinkel) zum selben Zeitpunkt wie der Druck aufgezeichnet werden, so daß diese zusammen mit dem Index $k$ oder einer Funktion hiervon nachgeschlagen werden kann.

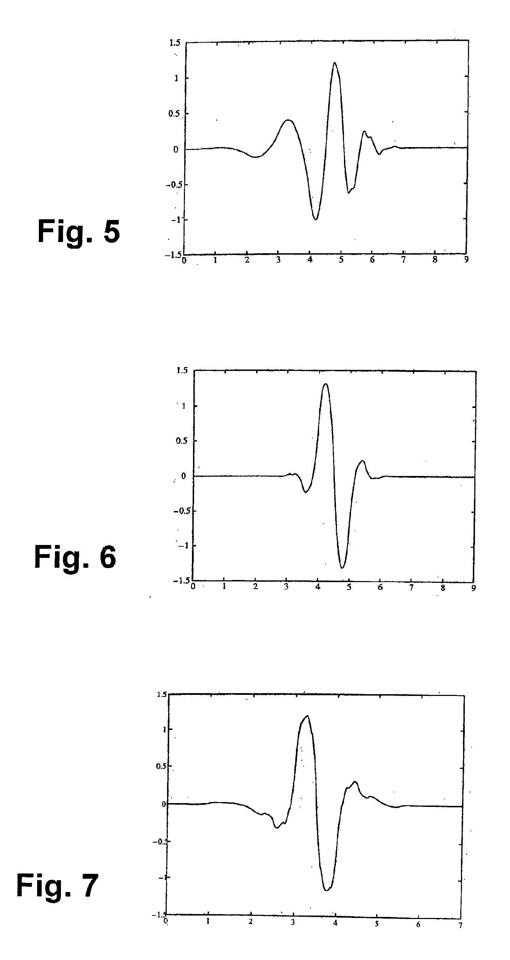

Die für die Transformation zugrundegelegten Wavelet-Funktionen haben einen großen Einfluß auf die Zuverlässigkeit und die Qualität der resultierenden Detektion des Verbrennungsbeginns. Zur Detektion von Diskontinuitäten im Zylinderdruck-Signal werden dabei vorzugsweise Wavelet-Funktionen mit einem verhältnismäßig kurzen Träger gewählt, d.h. einem kurzen Intervall auf der reellen Achse, auf welchem die Wavelet-Funktionen von Null verschieden sind. Das einfachste Beispiel ist das Haar-Wavelets. Grundsätzlich sind alle Wavelets geeignet, die auch vorteilhaft zur Kantendetektion bei der Bildverarbeitung eingesetzt werden können. Für die Detektion von Diskontinuitäten in den Ableitungen des Zylinderdruck-Signals werden regulärere Wavelets höherer Ordnung benötigt. Beispiele hierfür sind die Daubéchies 3- oder 5- (Figur 5) Wavelets oder biorthogonale Wavelets 5. Ordnung (Figur 6).

Die vorstehend erläuterten Algorithmen zur Bestimmung des Verbrennungsbeginns können auf verschiedene Arten weitergebildet werden. Eine Möglichkeit besteht darin, bei der Berechnung der Detailkoeffizienten die Auflösungsreduktion nach der Hochpaßfilterung (s.u.) zu unterlassen. Anstelle einer echten Wavelet-Transformation wird in diesem Fall eine Faltung mit dem Wavelet-Hochpaßfilter vorgenommen:

$$\gamma_j(k) = \sum_n \widetilde{g}(-n) \cdot \lambda_{j+1}(k - n) \qquad (3)$$

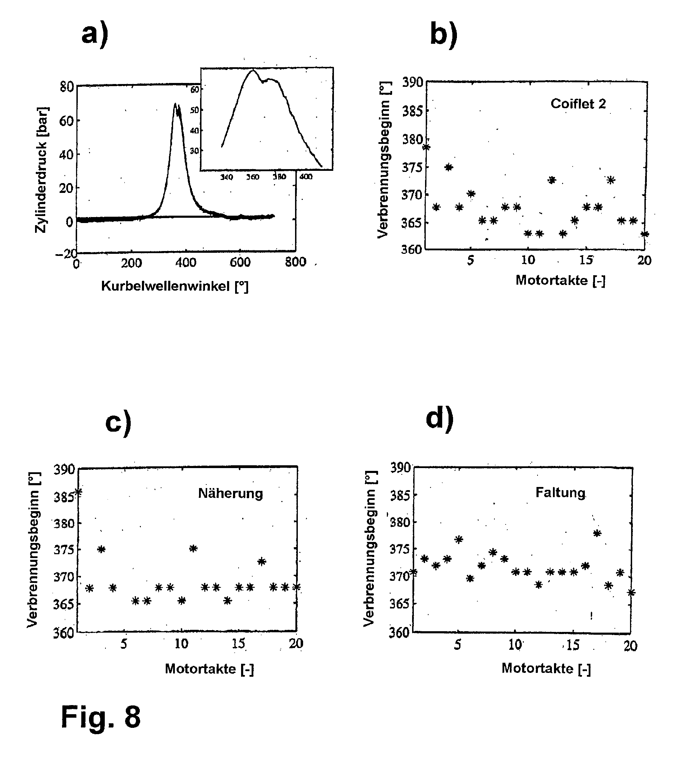

Dadurch wird die volle Anzahl an Punkten im Detailsignal erhalten (vgl. D.J. Scholl: Translation invariant data visualisation with orthogonal discrete wavelets, IEEE Transactions on Signal Processing, vol.46, S. 2031-2034, 1998). Ein derartiges Vorgehen erhöht die Auflösung und hilft dabei, den Beginn der Verbrennung präziser zu lokalisieren. Die bei Anwendung einer derartigen Faltung detektierten Verbrennungsanfänge sind in Figur 8d dargestellt. Dabei wurde das in Figur 8a dargestellte Zylinderdruck-Signal transformiert, welches über 20 Motorzyklen bei 3000 U/min und mittlerer Last aufgezeichnet wurde. Der Einsatz in Figur 8a zeigt einen einzelnen Verlauf im Bereich des Spitzendruckes. Die Abtastrate lag hier bei 15 kHz und entspricht einer Winkelauflösung von 0,8°.

Eine zweite Weiterbildung des beschriebenen Algorithmus besteht in einer Verringerung des Rechenaufwandes unter annähernder Beibehaltung der Zuverlässigkeit der Detektion des Verbrennungsbeginns. Dieses Ziel wird durch den Übergang von echten Wavelets zu Pseudo-Wavelets erreicht, bei denen es sich um Approximationen von Wavelets handelt, die numerisch für einen guten Kompromiß zwischen der Anzahl $n$ an Filterkoeffizienten und den für die spezielle Anwendung wichtigen Eigenschaften optimiert sind (vgl. D. Scholl, A. Haddow, K. Collins: Optimization techniques for pseudo-wavelet filters, submitted to IEEE Transactions on Signal Processing, 2000). Für die Detektion des Verbrennungsbeginns kann es sich bei den genannten Eigenschaften um die Antisymmetrie sowie die Minimierung (mindestens) des ersten Momentes handeln. Die Koeffizienten eines Hochpaßfilters $\tilde{g}$ einer Pseudo-Wavelet mit guten Eigenschaften in bezug auf die Detektion des Verbrennungsbeginns lauten:

{-0.09369, -0.09400, 0.6917, -0.6965, 0.9586, 0.09612, 0.01303, -0.01287}.

Figur 7 zeigt die zugehörige Pseudo-Wavelet-Funktion. Ergebnisse bei der Bestimmung der Verbrennungsanfänge aus dem Signal von Figur 8a unter Verwendung dieses Pseudo-Wavelets sind in Figur 8c dargestellt. Zum Vergleich hierzu zeigt Figur 8b die Ergebnisse bei Verwendung einer echten Wavelet-Funktion vom Typ Coiflet 2.

Falls die zu verwendende Wavelet-Transformation für mehrere Anwendungen gleichzeitig eingesetzt werden soll, insbesondere für die Detektion des Verbrennungsbeginns sowie die Berechnung einer Verbrennungslärmkennzahl, kann die Pseudo-Wavelet-Funktion so optimiert werden, daß ein guter Kompromiß zwischen den jeweiligen Anforderungen der Anwendungen erreicht wird.

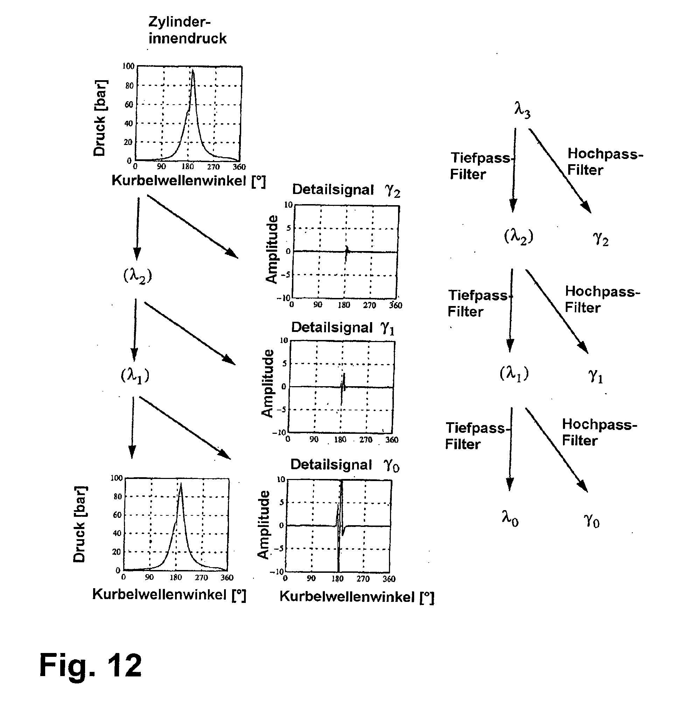

Im Folgenden wird die Technik der Wavelet-Transformation detaillierter erläutert. Durch eine Wavelet-Transformation wird ein Signal in ein Approximationssignal und ein Detailsignal zerlegt. Das Approximationssignal enthält niederfrequente Information über das Ursprungssignal und stellt eine Art laufende Mittelwertbildung dar. Das Detailsignal enthält hochfrequente Information, die im Approximationssignal vernachlässigt wird. Figur 12 zeigt am Beispiel der Transformation eines Zylinderdruck-Signals schematisch die bei einer Wavelet-Transformation ablaufenden Schritte.

Die Zerlegung eines Ursprungssignals kann bis zu jedem gewünschten Niveau vorangetrieben werden, indem das Approximationssignal des vorangegangenen Niveaus als das Startsignal verwendet und ein weiterer Schritt der Wavelet-Transformation angewendet wird. Dieses Vorgehen führt zu einem endgültigen Approximationssignal und mehreren Detailsignalen. Die resultierenden Signale liegen nach wie vor im Zeitbereich; es wird jedoch auch Information über den Frequenzinhalt offengelegt, da die in dem Detailsignal auf jedem Niveau enthaltenen Spektren bekannt sind. Aus diesem Grunde können zur selben Zeit Aussagen über das Verhalten des ursprünglichen Signals in Zeit und Frequenz gemacht werden.

Bei jedem Schritt der Transformation bleibt die Anzahl der Datenpunkte erhalten: Eine Hälfte der Datenpunkte speichert das Approximationssignal, die andere Hälfte das Detailsignal. Das gesamte Vorgehen ist verlustlos, d.h. das ursprüngliche Signal kann immer durch Anwendung der inversen Wavelet-Transformation auf die Approximation und die Detailsignale wiederhergestellt werden.

Das Prinzip der Wavelet-Transformation kann am einfachsten anhand eines Vergleichs mit der Fourier-Transformation illustriert werden. Beide Transformationen expandieren das ursprüngliche Signal in eine Reihe von Basisfunktionen. Im Falle der Fourier-Transformation

$$f(x) = \frac{1}{2}a_0 + \sum_{n=1}^{\infty} [a_n \cos(n\omega_0 x) + b_n \sin(n\omega_0 x)] \qquad (4)$$

sind die Basisfunktionen Sinusfunktionen. Für die Wavelet-Transformation

$$f(x) = \sum_{k=-\infty}^{\infty} \lambda_{0,k}\varphi(x-k) + \sum_{k=-\infty}^{\infty} \sum_{j=0}^{\infty} \gamma_{j,k}\psi(2^j x - k) \qquad (5)$$

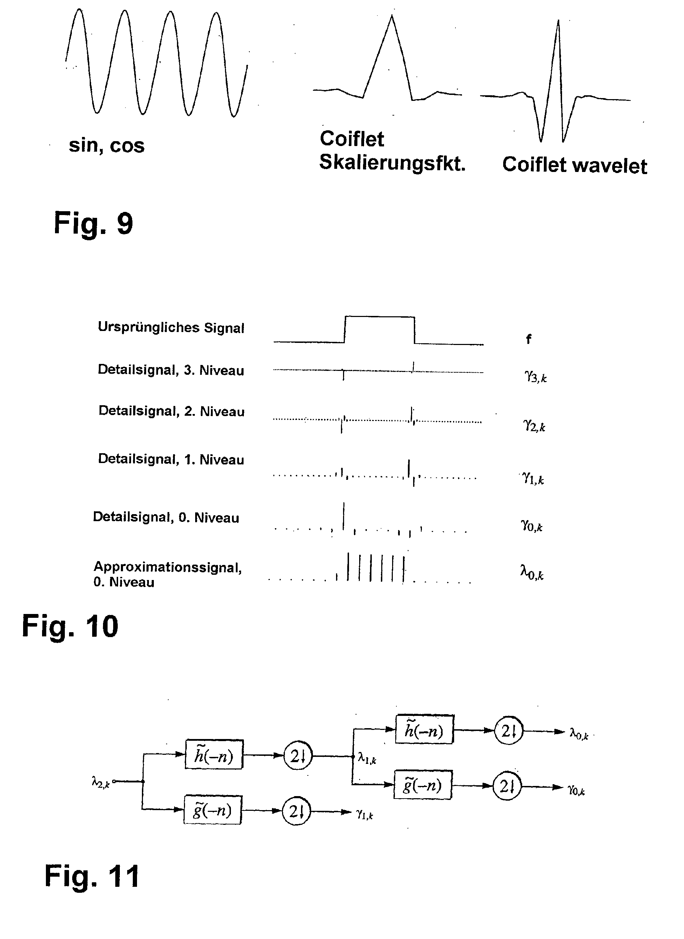

sind die Basisfunktionen die Skalierungsfunktion $\varphi$ und die Wavelet-Funktion $\psi$. Es gibt nicht nur ein Paar von Skalierungs- und Wavelet-Funktionen, sondern sehr viele Familien von $\varphi$- und $\psi$-Paaren mit verschiedenen Eigenschaften, die diese für bestimmte Anwendungen jeweils besonders geeignet machen. Im Gegensatz zu Sinusfunktionen sind Skalierungsfunktionen und Wavelets "kleine Wellen", deren Energie in einem endlichen Intervall auf der x-Achse (Zeit oder Ort) konzentriert ist (vgl. Figur 9). Dies ermöglicht es, Zeit- und Frequenzanalysen gleichzeitig durchzuführen.

Skalierungsfunktionen und Wavelets zeichnen sich durch folgende Eigenschaften aus (vgl. C.S. Burrus, R. A. Gopinath, H. Guo: Introduction to wavelets and wavelet Transforms, A Primer; Prentice Hall, Upper Saddle River, New Jersey, 1998):

1. Die Wavelet-Systeme werden aus einer einzigen Skalierungsfunktion oder einem Wavelet durch Translation (das heißt Lokalisierung der Energie von φ oder ψ an verschiedenen Orten entlang der unabhängigen Achse durch Subtraktion von k) und Skalierung (das heißt Kompression oder Dehnung der unabhängigen Achse durch Multiplikation von x mit $2^j$) erzeugt. Die Skalierungsfunktionen sind gegeben durch

$$\varphi_{0,k}(x) = \varphi(x\text{-}k) \qquad k \in Z. \tag{6}$$

Das "Mutter-Wavelet" ψ(x) wird durch die zweidimensionale Parametrisierung verschoben und skaliert

$$\psi_{j,k}(x) = 2^{j/2}\psi(2^j x\text{-}k) \qquad j, k \in Z \tag{7},$$

wobei **Z** die Menge aller ganzen Zahlen ist und der Faktor $2^{j/2}$ eine konstante Normierung unabhängig von der Skala j gewährleistet.

2. Die meisten Wavelet-Systeme erfüllen die Multiresolutions-Bedingungen

$$
\begin{aligned}
\varphi(x) &= \sum_n \tilde{h}(n) \cdot 2^{1/2}\varphi(2x - n), & n \in \mathbf{Z} \\
\psi(x) &= \sum_n \tilde{g}(n) \cdot 2^{1/2}\varphi(2x - n), & n \in \mathbf{Z}
\end{aligned}
\tag{8}
$$

Diese Bedingungen besagen, daß eine Skalierungsfunktion φ oder ein Wavelet ψ als gewichtete Summe von verschobenen Skalierungsfunktionen φ(2x) des nächsten Niveaus höherer Auflösung dargestellt werden können. $\tilde{h}(n)$ und $\tilde{g}(n)$ sind die sogenannten Gewichtungs- oder Filterkoeffizienten.

Die Multiresolutions-Eigenschaft bedeutet, daß jedes Signal, welches durch eine gewichtete Summe von φ(x-k) dargestellt werden kann, auch als eine gewichtete Summe von φ(2x-k) repräsentiert werden kann. Wenn die Basisfunktionen halb so breit sind und in halb so breiten Schritten verschoben werden, können sie feinere Details und daher eine größere Klasse von Signalen erfassen.

Das Ziel der Fourier- und der Wavelet-Transformationen besteht darin, Koeffizienten $a_n$, $b_n$, $\lambda_{0,k}$ und $\gamma_{j,k}$ der entsprechenden Reihendarstellung zu finden, da diese unter Umständen nützlichere Information über das Signal bereitstellen können als aus dem ursprünglichen Signal direkt ersichtlich. Anders als die Fourier-Transformation bildet die diskrete Wavelet-Transformation ein eindimensionales abgetastetes Signal in ein zweidimensionales Feld von Koeffizienten ab, dessen zwei Dimensionen die "Zeit" *k* und die Skala ("Frequenz") *j* sind. Die Approximationskoeffizienten λ enthalten alle verbleibenden niederfrequenten Informationen und haben daher nur einen Index, die Verschiebung *k der* Lokalisierung in der Zeit (oder im Ort). Gelegentlich wird die Notation $\gamma_j(k)$ für $\gamma_{j,k}$ und $\lambda_0(k)$ für $\lambda_{0,k}$ verwendet, um den Unterschied zwischen den zwei Indizes zu verdeutlichen.

Zur Veranschaulichung zeigt Figur 10 die diskrete Wavelet-Transformation eines abgetasteten Impulssignals f, was die Lokalisierungsfähigkeit der Wavelet-Transformation veranschaulicht. Die Detailsignale geben dabei eindeutig den Ort der Diskontinuitäten im ursprünglichen Signal an.

Wenn die Wavelet- oder Skalierungsfunktionen eine orthogonale Basis bilden:

$$\langle \varphi_{j,k}(x), \psi_{j,l}(x) \rangle = \int \varphi_{j,k}(x) \cdot \psi_{j,l}(x) dx = 0 \qquad i,j,k,l \in \mathbf{Z}$$

$$\langle \psi_{i,k}(x), \psi_{j,l}(x) \rangle = \int \psi_{i,k}(x) \cdot \psi_{j,l}(x) dx = c \cdot \delta_{ij}\delta_{kl} \qquad \delta_{ij} = \begin{cases} 1 & i = j \\ 0 & i \neq j \end{cases} \qquad (9)$$

können die Approximationskoeffizienten und Detailkoeffizienten durch Bestimmung der inneren Produkte berechnet werden

$$\lambda_{0,k} = \langle f(x), \varphi_{0,k}(x) \rangle = \int f(x) \cdot \varphi_{0,k}(x) dx$$

$$\gamma_{j,k} = \langle f(x), \psi_{j,k}(x) \rangle = \int f(x) \cdot \psi_{j,k}(x) dx \qquad (10)$$

In der Praxis erweist es sich allerdings nicht als effizient, die diskrete Wavelet-Transformation durch Bestimmung der inneren Produkte zu berechnen. Basierend auf Multiresolutions-Bedingungen kann gezeigt werden, daß nie mit Skalierungsoder Wavelet-Funktionen direkt gearbeitet werden muß. Unter Betrachtung von $\lambda$ und $\gamma$ als abgetastete Signale können digitale Filter gefunden werden, welche die Approximations- und Detailsignale auf verschiedenen Skalen berechnen. Auf diese Weise können die folgenden Gleichungen abgeleitet werden:

$$\lambda_j(k) = \sum_n \tilde{h}(-n) \cdot \lambda_{j+1}(2k-n)$$

$$\gamma_j(k) = \sum_n \tilde{g}(-n) \cdot \lambda_{j+1}(2k-n) \qquad (11)$$

Die digitalen Filter werden durch die Koeffizienten $\tilde{h}$ (-$n$) und $\tilde{g}$ (-$n$) beschrieben. Es handelt sich hierbei um FIR-Filter (Finite Impulse Response). Der Filter $\tilde{h}$, der zur Berechnung des Approximationssignals verwendet wird, ist ein Tiefpaßfilter, während $\tilde{g}$, der zur Berechnung des Detailsignals verwendet wird, ein Hochpaßfilter ist.

Gemäß Gleichung (11) muß die Abtastrate der Signale nach der Filterung halbiert (down-sampled) werden, um die Signale $\lambda_{j,k}$ und $\gamma_{j,k}$ geringerer Auflösung zu erhalten. Die Filterung und die Abtastratenhalbierung kann an den Approximationssignalen in iterativer Weise vorgenommen werden, um die gesamte Wavelet-Zerlegung mit verschiedenen Skalen j und ein endgültiges Approximationssignal zu finden. Die resultierende baumartige Struktur von Filtern ist in Figur 11 gezeigt. In diesem Beispiel wird das ursprünglich abgetastete Signal $\lambda_{2,k}$ in ein Approximationssignal $\lambda_{0,k}$ und zwei Detailsignale $\gamma_{1,k}$ und $\gamma_{0,k}$ zerlegt.

**Patentansprüche**

1. Verfahren zur Detektion des Verbrennungsbeginns in der Brennkammer einer Brennkraftmaschine, wobei der zeitliche Verlauf des Zylinderdrucks
gemessen wird,
**dadurch gekennzeichnet, daß**
das Zylinderdrucksignal einer Wavelet-Transformation unterzogen wird, und daß auf die daraus resultierenden Wavelet-Koeffizienten ein Auswahlkriterium angewendet wird, dessen Erfüllung die zum Verbrennungsbeginn gehörigen Koeffizienten anzeigt.

2. Verfahren nach Anspruch 1,
**dadurch gekennzeichnet, daß**
das Auswahlkriterium der Beginn des Überschreitens eines vorgegebenen Schwellwertes durch den Absolutwert der Wavelet-Koeffizienten ist.

**3.** Verfahren nach Anspruch 2,
**dadurch gekennzeichnet, daß**
der vorgegebene Schwellwert von Motorbetriebsparametern wie insbesondere der Drehzahl und/oder der Motorlast abhängt.

**4.** Verfahren nach einem der Ansprüche 1 bis 3,
**dadurch gekennzeichnet, daß**
eine diskrete Wavelet-Transformation angewendet wird.

**5.** Verfahren nach einem der Ansprüche 1 bis 4,
**dadurch gekennzeichnet, daß**
Wavelet-Funktionen und Skalierungsfunktionen verwendet werden, welche die Multiresolutionsbedingungen erfüllen, und dass die Wavelet-Koeffizienten durch sequentielle Hochpaßfilterung und Tiefpaßfilterung des Zylinderdruck-Signals gewonnen werden.

**6.** Verfahren nach Anspruch 5,
**dadurch gekennzeichnet, daß**
es zwischen den Hochpaßfilterungen und Tiefpaßfilterungen keine Abtastungsreduktion erfolgt.

**7.** Verfahren nach einem der Ansprüche 1 bis 6,
**dadurch gekennzeichnet, daß**
Näherungen für die Hoch- und Tiefpaßfilter verwendet werden, mit denen die Wavelet-Funktionen und Skalierungsfunktionen berechnet werden.

**8.** Verfahren zur Regelung des Verbrennungsbeginns in der Brennkammer einer Brennkraftmaschine mit Selbstzündung durch Veränderung von Motorbetriebsparametern wie insbesondere dem Injektionszeitpunkt des Kraftstoffs,
**dadurch gekennzeichnet, daß**
der Verbrennungsbeginn mit einem Verfahren nach mindestens einem der Ansprüche 1 bis 7 detektiert und als Regelgröße verwendet wird.

**9.** Motorsteuerung für eine Brennkraftmaschine mit Selbstzündung, enthaltend
einen Eingang für ein Zylinderdruck-Signal,
**dadurch gekennzeichnet, daß**
diese derart ausgebildet ist, dass der Verbrennungsbeginn aus dem Zylinderdruck-Signal gemäß einem Verfahren nach einem der Ansprüche 1 bis 7 bestimmt werden kann.

**10.** Motorsteuerung nach Anspruch 9,
**dadurch gekennzeichnet, daß**
diese Ausgänge für die Steuerung von Motorbetriebsparametern wie insbesondere dem Zeitpunkt der Kraftstoffinjektion aufweist, und dass die Steuerung derart ausgebildet ist, dass diese über die Ausgänge eine Rückkopplungsregelung des Verbrennungsbeginns durchführen kann.

**Fig. 1**

**Fig. 2**

**Fig. 3**

o 1. Niveau

* 2. Niveau

**Fig. 4**

Fig. 5

Fig. 6

Fig. 7

**Fig. 8**

sin, cos

Coiflet
Skalierungsfkt.

Coiflet wavelet

# Fig. 9

Ursprüngliches Signal — $f$

Detailsignal, 3. Niveau — $\gamma_{3,k}$

Detailsignal, 2. Niveau — $\gamma_{2,k}$

Detailsignal, 1. Niveau — $\gamma_{1,k}$

Detailsignal, 0. Niveau — $\gamma_{0,k}$

Approximationssignal, 0. Niveau — $\lambda_{0,k}$

# Fig. 10

# Fig. 11

**Fig. 12**

**Europäisches Patentamt**

**EUROPÄISCHER RECHERCHENBERICHT**

Nummer der Anmeldung

EP 01 13 0557

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN vol. 2000, no. 19, 5. Juni 2001 (2001-06-05) & JP 2001 055955 A (TOYOTA MOTOR CORP), 27. Februar 2001 (2001-02-27) * Zusammenfassung * --- | 1-3,7-10 | F02D41/40 F02D45/00 F02D35/02 |
| A | DE 100 11 614 A (DELPHI TECH INC) 13. September 2001 (2001-09-13) * Spalte 1, Zeile 29 - Spalte 7, Zeile 53 * --- | 1-10 | |
| A | FLORKOWSKI M: "WAVELET DENOISING OF PARTIAL DISCHARGE IMAGES" PROCEEDINGS OF THE 6TH. INTERNATIONAL CONFERENCE ON PROPERTIES AND APPLICATIONS OF DIELECTRIC MATERIALS. XI'AN, CHINA, JUNE 21 - 26, 2000, PROCEEDINGS OF THE INTERNATIONAL CONFERENCE ON PROPERTIES AND APPLICATIONS OF DIELECTRIC MATERIALS, NEW YORK, N, Bd. 2 OF 2 CONF. 6, 21. Juni 2000 (2000-06-21), Seiten 459-462, XP000997738 ISBN: 0-7803-5460-5 * das ganze Dokument * --- | 1-10 | RECHERCHIERTE SACHGEBIETE (Int.Cl.7) F02D |
| A | KIKUCHI H ET AL: "FAST NON-ORTHOGONAL WAVELET TRANSFORMS AND RECONSTRUCTION FOR DETONATION DETECTION" PROCEEDINGS OF THE INTERNATIONAL SYMPOSIUM ON CIRCUITS AND SYSTEMS. (ISCS). CHICAGO, MAY 3 - 6, 1993, NEW YORK, IEEE, US, Bd. 1, 3. Mai 1993 (1993-05-03), Seiten 503-506, XP000410045 ISBN: 0-7803-1281-3 * das ganze Dokument * ----- | 1-10 | |

Der vorliegende Recherchenbericht wurde für alle Patentansprüche erstellt

| Recherchenort | Abschlußdatum der Recherche | Prüfer |
|---|---|---|
| MÜNCHEN | 18. April 2002 | Calabrese, N |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                EP 01 13 0557

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-04-2002

| Im Recherchenbericht angeführtes Patentdokument | Datum der Veröffentlichung | Mitglied(er) der Patentfamilie | Datum der Veröffentlichung |
|---|---|---|---|
| JP 2001055955  A | 27-02-2001 | KEINE | |
| DE 10011614  A | 13-09-2001 | DE    10011614 A1<br>EP    1132605 A2 | 13-09-2001<br>12-09-2001 |

Für nähere Einzelheiten zu diesem Anhang : siehe Amtsblatt des Europäischen Patentamts, Nr.12/82

EPO FORM P0461